# EUROPEAN PATENT SPECIFICATION

(11) **EP 4 220 979 B1**
(45) Date of publication and mention of the grant of the patent: **29.10.2025**
(21) Application number: 22154267.3
(22) Date of filing: 31.01.2022
(51) Int. Cl.: H04B 3/46, H04L 43/0811, H04L 45/00

(54) **SYSTEM, APPARATUS, AND METHOD FOR INTELLIGENT SIGNAL ROUTING IN AN INDUSTRIAL COMMUNICATION NETWORK**
SYSTEM, GERÄT UND VERFAHREN ZUM INTELLIGENTEN SIGNALROUTING IN EINEM INDUSTRIELLEN KOMMUNIKATIONSNETZWERK
SYSTÈME, APPAREIL, ET PROCÉDÉ DE ROUTAGE DE SIGNAL INTELLIGENT DANS UN RÉSEAU DE COMMUNICATION INDUSTRIEL

(43) Date of publication of application: 02.08.2023
(73) Proprietor: Siemens Aktiengesellschaft, 80333 München (DE)
(72) Inventor: NEOG, Sankujyoti, 560076 Bangaluru, Karnataka (IN)
(74) Representative: Isarpatent

(56) References cited:
- US-A1- 2015 127 876
- US-A1- 2018 113 830

## Description

The present invention relates to a field of engineering of computer assisted engineering, and more particularly relates to a system, apparatus, and a method for intelligent signal routing in an industrial communication network.

A technical installation comprises a plurality of field devices and a plurality of controllers which are communicatively coupled to each other via an industrial communication network. The technical installation is at least one of an industrial manufacturing plant, an industrial processing plant, or an industrial power plant. The plurality of field devices function together in the technical installation to achieve one or more objectives of the technical installation. Examples of the plurality of field devices comprises servers, robots, switches, automation devices, motors, valves, pumps, actuators, sensors and other industrial equipment(s). The plurality of controllers comprise programmable logic controllers (PLC)s, human machine interfaces (HMIs). Examples of the industrial communication network includes Ethernet, Modbus, Controlnet and the like.

The plurality of field devices and the plurality of controllers communicate with each other via a plurality of cables of the industrial communication network. The plurality of cables comprises ethernet cables, robotic cables, sensor cables, multicore cables, and the like. The plurality of cables are implemented via a cable engineering process. The cable engineering process includes a list of activities associated with cable scheduling, cable routing, and cable termination associated with the plurality of cables in the industrial communication network. Typically, the technical installation comprises hundreds and thousands of field devices. It is a laboursome, time-consuming, and difficult task for a commission engineer to manually implement a plurality of cablebased communication channels between each of the plurality of field devices and the plurality of controllers. Further, a few cables of the plurality of cables may be faulty. Since faulty cables lead to unscheduled downtimes, the faulty cables have to be identified by human operators via regular performance of loop testing in the plurality of cables. It is a laboursome, time-consuming, and difficult task for the human operators to manually perform loop testing for each of the plurality of cables. Furthermore, in a case where the faulty cables are identified in the plurality of cables, it is difficult to replace the faulty cables with functioning cables without requiring extensive downtime. Furthermore, often, the plurality of cables are not terminated correctly by the commission engineer. Incorrect termination of the plurality of cables lead to unscheduled downtimes.

US 2015/0127876 A1 disclosed an apparatus that includes a first interface to be communicatively coupled to one of a first field device or a second field device, and a communication processor to encode first information received from the one of the first field device or the second field device for communication via a bus using a third communication protocol. The apparatus further includes a second interface communicatively coupled to the communication processor and the bus to communicate the first information to a controller in the process control system. It is an object of the present invention to provide a system, apparatus, and method for intelligent signal routing in an industrial communication network.

The object of the invention is achieved by a system for intelligent signal routing in an industrial communication network. The industrial communication network interconnects a plurality of field devices and a plurality of controllers in a technical installation. The technical installation is at least one of an industrial manufacturing plant, an industrial processing plant, or an industrial power plant. The plurality of field devices function together in the technical installation to achieve one or more objectives of the technical installation. Examples of the plurality of field devices comprises servers, robots, switches, automation devices, motors, valves, pumps, actuators, sensors and other industrial equipment(s). The plurality of controllers comprise programmable logic controllers (PLC)s, human machine interfaces (HMIs). Examples of the industrial communication network includes Ethernet, Modbus, Controlnet and the like. The plurality of field devices and the plurality of controllers communicate with each other via a plurality of cables of the industrial communication network.

The plurality of cables comprises ethernet cables, robotic cables, sensor cables, multicore cables, and the like. In one example, each of the plurality of cables is a multi-core cable. The system comprises a connector device, a field signal marshal device, and a junction box device. The connector device is a device which is configured to carry field signals between a field device and the field signal marshal device. The field signal marshal device is a device which is configured to carry field signals from the connector device to the junction box device. The junction box device is configured to transmit the field signals to a programmable logic controller. The connector device is communicatively coupled with at least one field device of the plurality of field devices, via at least one cable of the plurality of cables. The at least one field device has at least one unique identification number (ID). The unique identification number is at least one an alphanumeric, hexadecimal, or a binary code to identify the at least one field device. Each of the plurality of field devices have one or more unique Ids. The at least one field device is configured to generate at least one field signal. The connector device receives the at least one field signal via the at least one cable connected to the at least one field device. The connector device is further communicatively coupled to the junction box device. The connector device is a device which is configured to receive, process and transmit the at least one field signal to the junction box device.

The connector device comprises a signal mixer. The signal mixer is at least one of an active mixer and a passive mixer. The signal mixer is at least one of a balanced mixer and an unbalanced mixer. The signal mixer is configured to receive the at least one field signal from the at least one field device. The signal mixer is further configured to superimpose the at least one unique ID on the received at least one field signal to generate a mixed signal. In a claimed embodiment, the signal mixer superimposes the at least one unique ID on the at least one field signal by superimposing a high frequency signal on the at least one field signal. In such a case, the high frequency signal comprises information associated with the at least one unique ID.

In the preferred embodiment, the field signal marshal device is communicatively coupled to an input-output module and the junction box device. The input output module is connected to one or more of the plurality of controllers. The one or more of the plurality of controllers generate a first request for a specific field signal from a specific field device of the plurality of field devices. The first request comprises information about a specific unique ID associated with the specific field device. The field signal marshal device is configured to receive the first request from the input-output module. Further, the field signal marshal device is configured to receive the mixed signal generated by the signal mixer, via the junction box device. The field signal marshal device is connected to the junction box device via one or more of the plurality of cables.

In the preferred embodiment, the field signal marshal device further comprises a first input-output channel. In one example, the first input-output channel is connected to the plurality of cables, on one end and is connected to the input-output module on the other end. The first input-output channel is configured to transmit to the junction box device, the first request comprising the specific unique ID associated with the specific field signal. The first input-output channel is further configured to transmit the mixed signal to the input-output module.

In the preferred embodiment, the junction box device is connected to the connector device and the field signal marshal device. The junction box device comprises a first processing unit. The first processing unit, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The first processing unit may also include embedded controllers, such as generic or programmable logic devices or arrays, application specific integrated circuits, single-chip computers, and the like. The first processing unit is configured to receive, the first request from the field signal marshal device and the mixed signal from the signal mixer.

In the preferred embodiment, the first processing unit is further configured to extract, from the mixed signal, the at least one unique ID of the at least one field device. The first processing unit is further configured to compare the specific unique ID in the first request, with the at least one unique ID extracted from the mixed signal. The first processing unit is further configured to determine whether the specific unique ID matches with the at least one unique ID in the mixed signal. The first processing unit is further configured to route the mixed signal associated with the at least one unique ID, to the first input-output channel based on a determination that the specific unique ID matches with the at least one unique ID. Advantageously, the system intelligently routes the at least one field signal to the first input-output channel, based on the first request received from the input-output module. Thus, the at least one field signal is routed to the plurality of controllers automatically, without user intervention. Furthermore, time and effort required to perform cable engineering and hardwiring the plurality of field devices to the plurality of controllers is reduced. Furthermore, the system enables the commission engineer to reroute the at least one field devices to different controllers of the plurality of controllers, without making hardware changes

In the preferred embodiment, the system further comprises a memory. The memory may be non-transitory volatile memory and non-volatile memory. The memory may be coupled for communication with the first processing unit, such as being a computer-readable storage medium. The first processing unit may execute machine-readable instructions and/or source code stored in the memory. A variety of machine-readable instructions may be stored in and accessed from the memory 204. The memory may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory includes an integrated development environment (IDE). The IDE includes an automation module stored in the form of machine-readable instructions on any of the above-mentioned storage media and may be in communication with and executed by the first processing unit. The memory is further configured to store a look-up table. The look-up table comprises information associated with a plurality of mappings between a plurality of unique IDs and a plurality of input-output channels of the field signal marshal device associated with a plurality of field devices connected to the industrial communication network. The plurality of mappings in the look-up table denotes correct mapping of the plurality of field devices to the plurality of input-output channels.

In the preferred embodiment, the first processing unit is further configured to capture a signal from an active communication channel between a field device of the plurality of field devices and a second input-output channel of the plurality of input-output channels. In one example, the captured signal is the mixed signal generated by the signal mixer of the connector device.

In the preferred embodiment, the first processing unit is further configured to extract a unique ID from the signal captured from the active communication channel. In one example, the first processing unit is configured to extract the unique ID by application of at least one signal processing filter on the captured signal. Examples of the at least one signal processing filter include a high-pass filter and a low-pass filter. In another example, the first processing unit is configured to extract the unique ID by application of a decryption algorithm on the captured signal.

In the preferred embodiment, the first processing unit is further configured to compare the extracted unique ID with each of the plurality of unique ID present in the look-up table. In a case where the extracted unique ID is present in the look-up table, the first processing unit is configured to determine whether the extracted unique ID is mapped to the second input-output channel of the plurality of input-output channels. In a case where it is determined that, in the look-up table, the extracted unique ID is not mapped to the second input-output channel, the first processing unit is further configured to terminate the active communication channel. Advantageously, any active communication channel from incorrectly connected field devices of the plurality of field devices are automatically terminated. Thus, the plurality of field devices are protected from incorrect termination.

Further, the first processing unit is further configured to analyze the look-up table to determine whether a third input-output channel of the plurality of input-output channels which is mapped to the extracted unique ID. The first processing unit is further configured to reroute the captured signal to the determined third input-output channel of the plurality of input-output channels. Advantageously, any faults in connections between the plurality of field devices and the plurality of input-output channels are automatically rectified. Thus, the plurality of field devices are protected from incorrect termination.

In a preferred embodiment, the field signal marshal device further comprises a second processing unit. The second processing unit may be similar in structure and functionality as the first processing unit. The second processing unit is configured to transmit a second request to the junction box device via the first input-output channel. The second request is to conduct a loop test of the first input-output channel. The second processing unit is further configured to determine whether the field signal marshal device receives a response for the second request from the junction box device, within a specified time interval, via the first input-output channel.

The second processing unit is further configured to display, based on a determination that the response is not received within the specific time interval, a notification that the first input-output channel is faulty. The notification is displayed on a display device. The second processing unit is further configured to transmit the second request for the loop test to the junction box device via the second input-output channel of the plurality of input-output channels.

In a preferred embodiment, the connector device further comprises a third processing unit which is configured to extract, from the look-up table, the at least one unique ID associated with the at least one field device. The third processing unit is further configured to generate the high frequency signal based on the extracted at least one unique ID.

The object of the invention is achieved by an apparatus for intelligent signal routing in an industrial communication network. The apparatus for intelligent signal routing in an industrial communication network comprises a signal mixer, a first processing unit, and a first input-output channel. The signal mixer is further configured to receive at least one field signal from the at least one field device. The at least one field device has at least one unique ID. The signal mixer is further configured to superimpose the at least one unique ID on the received at least one field signal to generate a mixed signal.

The first input-output channel is configured to transmit to the signal mixer, a first request comprising a specific unique ID associated with a specific field signal. The first input-output channel is configured to transmit the mixed signal to an input-output module. The first processing unit is configured to receive, the first request from the first input-output channel and the mixed signal from the signal mixer.

The first processing unit is further configured to extract the at least one unique ID from the mixed signal. The first processing unit is further configured to determine whether the specific unique ID matches with the at least one unique ID associated with the at least one field device. The first processing unit is further configured to route the mixed signal associated with the at least one unique ID, to the first input-output channel based on a determination that the specific unique ID matches with the at least one unique ID associated with the at least one field device.

In a preferred embodiment, the apparatus further comprises a memory which is configured to store a look-up table. The look-up table comprises information associated with mappings between a plurality of unique IDs associated with a plurality of field devices in the industrial communication network, and a plurality of input-output channels of the field signal marshal device.

In the preferred embodiment, the first processing unit is further configured to capture a signal from an active communication channel between a field device of the plurality of field devices and a second input-output channel of the plurality of input-output channels. The first processing unit is further configured to extract a unique ID from the signal captured from the active communication channel. The first processing unit is further configured to analyze the look-up table to determine whether, in the look-up table, the extracted unique ID is mapped to the second input-output channel of the plurality of input-output channels. The first processing unit is further configured to terminate the active communication channel based on a determination that the extracted unique ID is not mapped to the second input-output channel of the plurality of input-output channels.

In the preferred embodiment, the first processing unit is further configured to analyze the look-up table to determine a third input-output channel of the plurality of input-output channels, into which the extracted unique ID is mapped. The first processing unit is further configured to reroute the captured signal to the determined third input-output channel of the plurality of input-output channels.

In the preferred embodiment, the apparatus further comprising a second input-output channel and a second processing unit. The second processing unit is configured to transmit a second request to the junction box device via the first input-output channel. The second request is for conducting a loop test of the first input-output channel. The second processing unit is further configured to determine whether the field signal marshal device receives a response for the second request from the junction box device, within a specified time interval, via the first input-output channel. The second processing unit is further configured to display, based on a determination that the response is not received within the specific time interval, a notification that the first input-output channel is faulty. The second processing unit is further configured to transmit the second request for the loop test to the junction box device via the second input-output channel.

In the preferred embodiment, the apparatus further comprises a third processing unit configured to extract, from the look-up table, the at least one unique ID associated with the at least one field device. The third processing unit is further configured to generate the high frequency signal based on the extracted at least one unique ID, wherein the at least one unique ID is superimposed on the at least one field signal by mixing the high frequency signal with the at least one field signal.

The object of the invention is further achieved by a method for intelligent signal routing in an industrial communication network. The method of intelligent signal routing in an industrial communication network is executed in a system comprising a signal mixer, a first input-output channel, and a first processing unit.

In the preferred embodiment, the method comprises receiving, by the signal mixer, at least one field signal from the at least one field device. The at least one field device has at least one unique ID. The method further comprises superimposing, by the signal mixer, the at least one unique ID on the received at least one field signal to generate a mixed signal. The method further comprises transmitting via the first input-output channel to a junction box device, a first request comprising a specific unique ID associated with a specific field signal. The method further comprises extracting, by the first processing unit, the at least one unique ID from the mixed signal. The method further comprises determining, by the first processing unit, whether the specific unique ID matches with the at least one unique ID associated with the at least one field device. The method further comprises routing, by the first processing unit, the mixed signal associated with the at least one unique ID, to the first input-output channel based on a determination that the specific unique ID matches with the at least one unique ID associated with the at least one field device.

In the preferred embodiment, the method further comprises capturing, by the first processing unit, a signal from an active communication channel between a field device of a plurality of field devices and a second input-output channel of a plurality of input-output channels. The method further comprises extracting, by the first processing unit, a unique ID from the signal captured from the active communication channel.

The method further comprises analyzing, by the first processing unit, a look-up table to determine whether, in the look-up table, the extracted unique ID is mapped to the second input-output channel of the plurality of input-output channels. The method further comprises terminating, by the first processing unit, the active communication channel based on a determination that the extracted unique ID is not mapped to the second input-output channel of the plurality of input-output channels.

In the preferred embodiment, the method further comprises analyzing, by the first processing unit, the look-up table to determine a third input-output channel of the plurality of input-output channels, into which the extracted unique ID is mapped. The method further comprises rerouting, by the first processing unit, the captured signal to the determined third input-output channel of the plurality of input-output channels.

In the preferred embodiment, the method further comprises transmitting, by the first processing unit, a second request to the junction box device via the first input-output channel. The second request is for conducting a loop test of the first input-output channel. The method further comprises determining, by the first processing unit, whether the field signal marshal device receives a response for the second request from the junction box device, within a specified time interval, via the first input-output channel.

The method further comprises displaying, by the first processing unit, based on a determination that the response is not received within the specific time interval, a notification that the first input-output channel is faulty. The method further comprises transmitting, by the first processing unit, the second request for the loop test to the junction box device via the second input-output channel.

In the preferred embodiment, the method further comprises extracting, by the first processing unit, from the look-up table, the at least one unique ID associated with the at least one field device. The method further comprises generating, by the first processing unit, the high frequency signal based on the extracted at least one unique ID, wherein the at least one unique ID is superimposed on the at least one field signal by mixing the high frequency signal with the at least one field signal.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an system for intelligent signal routing in an industrial communication network, according to an embodiment of the present invention;
- FIG 2: is a block diagram of the system, such as that shown in FIG. 1, in which an embodiment of the present invention can be implemented;
- FIG 3: is a block diagram of an apparatus for intelligent signal routing in an industrial communication network, in which an embodiment of the present invention can be implemented; and
- FIG 4A-C: is a flowchart of an method for intelligent signal routing in an industrial communication network, in which an embodiment of the present invention can be implemented.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

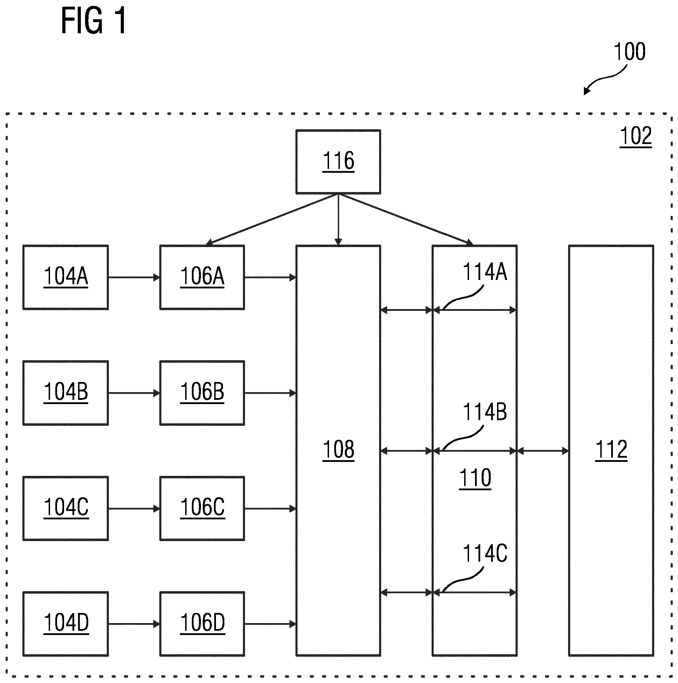

FIG 1 is a block diagram of a system 102 for intelligent signal routing in an industrial communication network 100, according to an embodiment of the present invention. The industrial communication network 100 interconnects a plurality of field devices 104A-D and an input-output module 112 of a plurality of controllers in a technical installation.

The technical installation is at least one of an industrial manufacturing plant, an industrial processing plant, or an industrial power plant. The plurality of field devices 104A-D function together in the technical installation to achieve one or more objectives of the technical installation. Examples of the plurality of field devices 104A-D comprises servers, robots, switches, automation devices, motors, valves, pumps, actuators, sensors and other industrial equipment(s). The plurality of controllers comprise programmable logic controllers (PLC)s, human machine interfaces (HMIs). Examples of the industrial communication network 100 includes Ethernet, Modbus, Controlnet and the like. The plurality of field devices 104A-D and the plurality of controllers communicate with each other via a plurality of cables of the industrial communication network 100.

The plurality of cables comprises ethernet cables, robotic cables, sensor cables, multicore cables, and the like. In one example, each of the plurality of cables is a multi-core cable. The system 102 comprises at least one connector device 106A-D, a field signal marshal device 110, and a junction box device 108. The connector device 106A-D is communicatively coupled with at least one field device of the plurality of field devices 104A-D, via at least one cable of the plurality of cables. The at least one field device has at least one unique identification number (ID). The unique identification number is at least one an alphanumeric, hexadecimal, or a binary code to identify the at least one field device. Each of the plurality of field devices 104A-D have one or more unique Ids. The at least one field device is configured to generate at least one field signal. The connector device 106A-D receives the at least one field signal via the at least one cable connected to the at least one field device. The connector device 106A-D is further communicatively coupled to the junction box device 108. The connector device 106A-D is a device which is configured to receive, process and transmit the at least one field signal to the junction box device 108.

The field signal marshal device 110 is communicatively coupled to the input output module 112 and the junction box device 108. The input output module 112 is connected to one or more of the plurality of controllers. The one or more of the plurality of controllers generate a first request for a specific field signal from a specific field device of the plurality of field devices 104A-D. The system 102 further comprises a memory 116. The memory 116 may be non-transitory volatile memory and non-volatile memory.

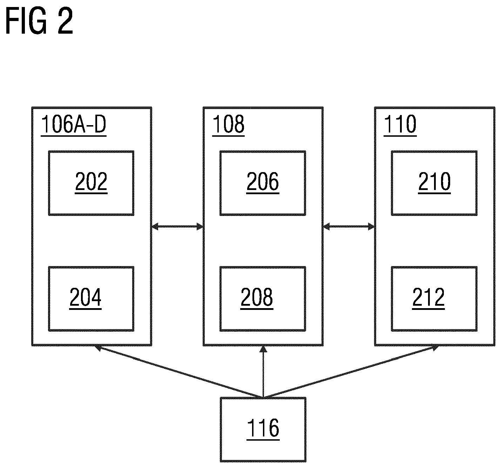

FIG 2 is a block diagram of the system, such as that shown in FIG 1, in which an embodiment of the present invention can be implemented. FIG 2 is explained in conjunction with elements of FIG 1.

The connector device 106A-D comprises a signal mixer 202. The signal mixer 202 is at least one of an active mixer, a passive mixer, a balanced mixer or an unbalanced mixer. The signal mixer 202 is configured to receive the at least one field signal from at least one field device (104A, 104B, 104C, or 104D) of the plurality of field devices (104A-D). The signal mixer 202 is further configured to superimpose the at least one unique ID on the received at least one field signal to generate a mixed signal. In one example, the signal mixer 202 superimposes the at least one unique ID on the at least one field signal by superimposing a high frequency signal on the at least one field signal. In such a case, the high frequency signal comprises information associated with the at least one unique ID.

The first request comprises information about a specific unique ID associated with the specific field device. The field signal marshal device 110 is configured to receive the first request from the input-output module 112. Further, the field signal marshal device 110 is configured to receive the mixed signal generated by the signal mixer 202, via the junction box device 108. The field signal marshal device 110 is connected to the junction box device 108 via one or more of the plurality of cables.

The field signal marshal device 110 further comprises a first input-output channel 114A of a plurality of input-output channels 114A-C. In one example, the first input-output channel 114A is connected to the plurality of cables, on one end and is connected to the input-output module 112 on the other end. The first input-output channel 114A is configured to transmit to the junction box device 108, the first request comprising the specific unique ID associated with the specific field signal. The first input-output channel 114A is further configured to transmit the mixed signal to the input-output module 112.

The junction box device 108 is connected to the connector device 106A-D and the field signal marshal device 110. The junction box device 108 comprises a first processing unit 206. The first processing unit 206, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The first processing unit 206 may also include embedded controllers, such as generic or programmable logic devices or arrays, application specific integrated circuits, single-chip computers, and the like. The first processing unit 206 is configured to receive, the first request from the field signal marshal device 110 and the mixed signal from the signal mixer 202.

The first processing unit 206 is further configured to extract, from the mixed signal, the at least one unique ID of the at least one field device 104A. The first processing unit 206 is further configured to compare the specific unique ID in the first request, with the at least one unique ID extracted from the mixed signal. The first processing unit 206 is further configured to determine whether the specific unique ID matches with the at least one unique ID in the mixed signal. The first processing unit 206 is further configured to route the mixed signal associated with the at least one unique ID, to the first input-output channel 114A based on a determination that the specific unique ID matches with the at least one unique ID. Advantageously, the system intelligently routes the at least one field signal to the first input-output channel 114A, based on the first request received from the input-output module. Thus, the at least one field signal is routed to the plurality of controllers automatically, without user intervention. Furthermore, time and effort required to perform cable engineering and hardwiring the plurality of field devices 104A-D to the plurality of controllers is reduced.

In one example, the junction box device 108 further comprises a demultiplexer 208. In such a case, the processing unit 206 is configured to route the mixed signal by using the demultiplexer 208.

The memory may be coupled for communication with the first processing unit 206, such as being a computer-readable storage medium. The first processing unit 206 may execute machine-readable instructions and/or source code stored in the memory. A variety of machine-readable instructions may be stored in and accessed from the memory 116. The memory may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory includes an integrated development environment (IDE). The IDE includes an automation module stored in the form of machine-readable instructions on any of the above-mentioned storage media and may be in communication with and executed by the first processing unit 206. The memory is further configured to store a look-up table. The look-up table comprises information associated with a plurality of mappings between a plurality of unique IDs and the plurality of input-output channels 114A-C of the field signal marshal device 110 associated with the plurality of field devices 104A-D connected to the industrial communication network 100. The plurality of mappings in the look-up table denotes correct mapping of the plurality of field devices 104A-D to the plurality of input-output channels 114A-C.

The first processing unit 206 is further configured to capture a signal from an active communication channel between a field device (such as the first field device 104A) of the plurality of field devices 104A-D and a second input-output channel 114B of the plurality of input-output channels 114A-D. In one example, the captured signal is the mixed signal generated by the signal mixer 202 of the connector device 106A-D.

The first processing unit 206 is further configured to extract a unique ID from the signal captured from the active communication channel. In one example, the first processing unit 206 is configured to extract the unique ID by application of at least one signal processing filter on the captured signal. Examples of the at least one signal processing filter include a high-pass filter and a low-pass filter. In another example, the first processing unit 206 is configured to extract the unique ID by application of a decryption algorithm on the captured signal.

The first processing unit 206 is further configured to compare the extracted unique ID with each of the plurality of unique ID present in the look-up table. In a case where the extracted unique ID is present in the look-up table, the first processing unit 206 is configured to determine whether the extracted unique ID is mapped to the second input-output channel 114B of the plurality of input-output channels 114A-C. In a case where it is determined that, in the look-up table, the extracted unique ID is not mapped to the second input-output channel 114B, the first processing unit 202 is further configured to terminate the active communication channel. Advantageously, any active communication channel from incorrectly connected field devices of the plurality of field devices 104A-D are automatically terminated. Thus, the plurality of field devices 104A-D are protected from incorrect termination. Furthermore, the system 102 enables the commission engineer to reroute the at least one field signal to different controllers by simply modifying the look-up table.

Further, the first processing unit 206 is further configured to analyze the look-up table to determine whether a third input-output channel 114C of the plurality of input-output channels 114A-C which is mapped to the extracted unique ID. The first processing unit 206 is further configured to reroute the captured signal to the determined third input-output channel 114C of the plurality of input-output channels 114A-C. Advantageously, any faults in connections between the plurality of field devices 104A-D and the plurality of input-output channels 114A-C are automatically rectified. Thus, the plurality of field devices 104A-D are protected from incorrect termination.

The field signal marshal device 110 further comprises a second processing unit 210. The second processing unit 210 may be similar in structure and functionality as the first processing unit 206. The second processing unit 210 is configured to transmit a second request to the junction box device via the first input-output channel 114A. The second request is to conduct a loop test of the first input-output channel 114A. The second processing unit 210 is further configured to determine whether the field signal marshal device 110 receives a response for the second request from the junction box device 108, within a specified time interval, via the first input-output channel 114A.

The second processing unit 210 is further configured to display, based on a determination that the response is not received within the specific time interval, a notification that the first input-output channel 114A is faulty. The notification is displayed on a display device 212. In one example, the display device is a liquid crystal display device. The second processing unit 210 is further configured to transmit the second request for the loop test to the junction box device 108 via the second input-output channel 114B of the plurality of input-output channels 114A-C.

The connector device 106A-D further comprises a third processing unit 204 which is configured to extract, from the look-up table, the at least one unique ID associated with the at least one field device. The third processing unit 204 is further configured to generate the high frequency signal based on the extracted at least one unique ID.

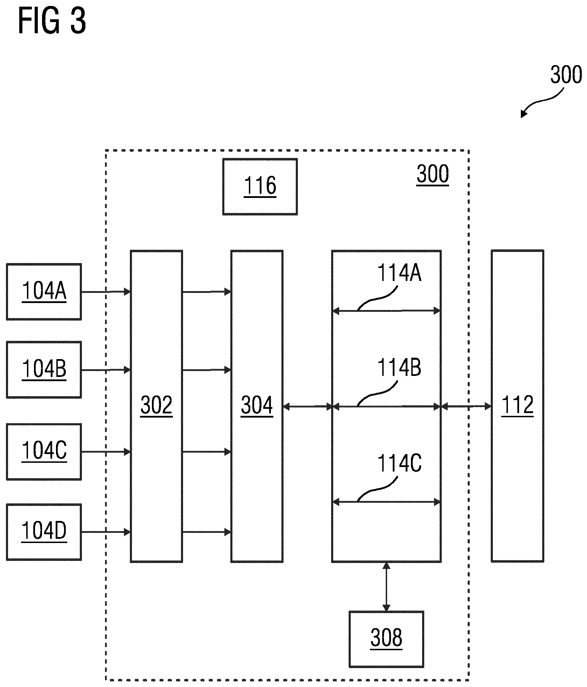

FIG 3 is a block diagram of an apparatus 300 for intelligent signal routing in an industrial communication network 100, in which an embodiment of the present invention can be implemented.

The apparatus 300 for intelligent signal routing in the industrial communication network 100 comprises a signal mixer 302, a processing unit 304, and a plurality of input-output channels 114A-C. The signal mixer 302 is further configured to receive at least one field signal from at least one field device 104A of the plurality of field devices 104A-D. The at least one field device has at least one unique ID. The signal mixer 302 is further configured to superimpose the at least one unique ID on the received at least one field signal to generate a mixed signal.

A first input-output channel 114A is configured to transmit to the signal mixer 302, a first request comprising a specific unique ID associated with a specific field signal. The first input-output channel is further configured to transmit the mixed signal to the input-output module 112. The first processing unit 304 is configured to receive, the first request from the first input-output channel 114A and the mixed signal from the signal mixer 302.

The first processing unit 304 is further configured to extract the at least one unique ID from the mixed signal. The first processing unit 304 is further configured to determine whether the specific unique ID matches with the at least one unique ID associated with the at least one field device 104A. The first processing unit 304 is further configured to route the mixed signal associated with the at least one unique ID, to the first input-output channel 114A based on a determination that the specific unique ID matches with the at least one unique ID associated with the at least one field device 104A.

The apparatus 300 further comprises the memory 116 which is configured to store a look-up table. The look-up table comprises information associated with mappings between a plurality of unique IDs associated with the plurality of field devices 104A-D in the industrial communication network 100, and the plurality of input-output channels 114A-C.

The first processing unit 304 is further configured to capture a signal from an active communication channel between a field device 104A of the plurality of field devices 104A-D and a second input-output channel 114B of the plurality of input-output channels 114A-C. The first processing unit 304 is further configured to extract a unique ID from the signal captured from the active communication channel. The first processing unit 304 is further configured to analyze the look-up table to determine whether, in the look-up table, the extracted unique ID is mapped to the second input-output channel 114B of the plurality of input-output channels 114A-C. The first processing unit 304 is further configured to terminate the active communication channel based on a determination that the extracted unique ID is not mapped to the second input-output channel 114B of the plurality of input-output channels 114A-C.

The first processing unit 304 is further configured to analyze the look-up table to determine a third input-output channel 114C of the plurality of input-output channels 114A-C, into which the extracted unique ID is mapped. The first processing unit 304 is further configured to reroute the captured signal to the determined third input-output channel 114C of the plurality of input-output channels 114A-C.

The apparatus 300 further comprises a second processing unit 308 which is further configured to transmit a second request to the first input-output channel 114A for conducting a loop test of the first input-output channel 114A. The second processing unit 308 is further configured to determine whether the first input-output channel receives a response from the first processing unit 304, within a specified time interval. The second processing unit 308 is further configured to display, based on a determination that the response is not received within the specific time interval, a notification that the first input-output channel 114A is faulty. The second processing unit 308 is further configured to transmit the second request for the loop test to the first processing unit 304 via the second input-output channel 114B.

The first processing unit 304 is further configured to extract, from the look-up table, the at least one unique ID associated with the at least one field device. The third processing unit is further configured to generate the high frequency signal based on the extracted at least one unique ID, wherein the at least one unique ID is superimposed on the at least one field signal by mixing the high frequency signal with the at least one field signal.

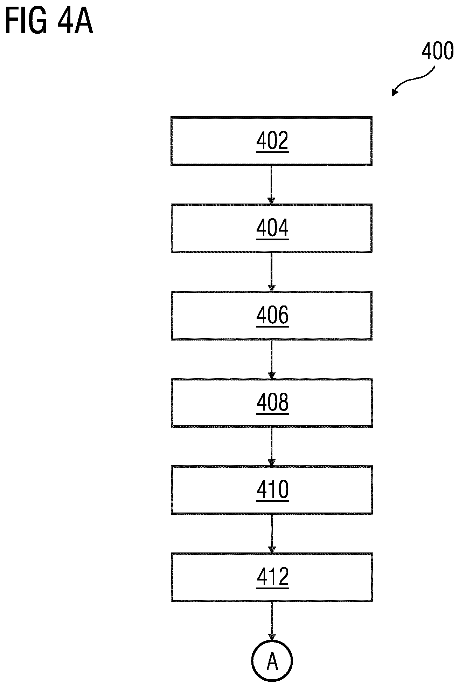

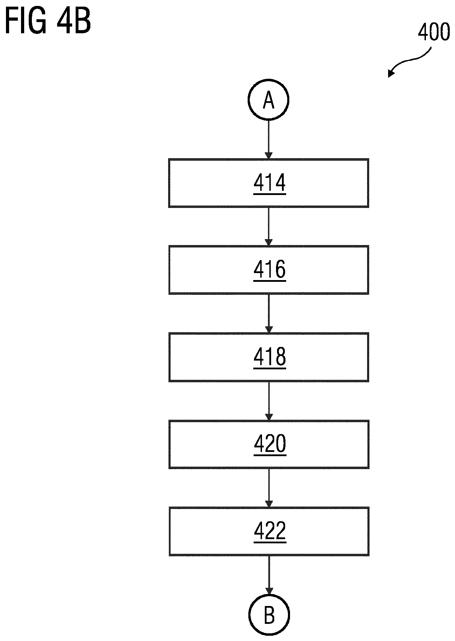

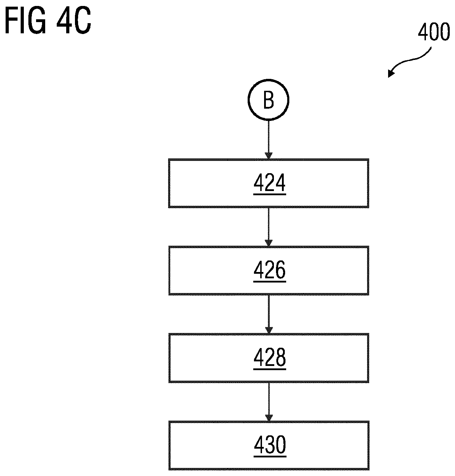

FIG 4A-C is a flowchart of an method 400 for intelligent signal routing in an industrial communication network 100, in which an embodiment of the present invention can be implemented. FIG 4A-C is explained in conjunction with FIG 1, 2, and 3.

At step 402, the signal mixer 202 receives the at least one field signal from at least one field device (104A, 104B, 104C, or 104D) of the plurality of field devices (104A-D). At step 404, the signal mixer 202 superimposes the at least one unique ID on the received at least one field signal to generate a mixed signal. In one example, the signal mixer 202 superimposes the at least one unique ID on the at least one field signal by superimposing a high frequency signal on the at least one field signal. The high frequency signal is one of a analog or a digital signal which is superposed on the at least one field signal. In such a case, the high frequency signal comprises information associated with the at least one unique ID.

The first request comprises information about a specific unique ID associated with the specific field device. At step 406, the field signal marshal device 110 receives the first request from the input-output module 112. At step 408, field signal marshal device 110 receives the mixed signal generated by the signal mixer 202, via the junction box device 108. The field signal marshal device 110 is connected to the junction box device 108 via one or more of the plurality of cables.

At step 410, the first input-output channel 114A transmits to the junction box device 108, the first request comprising the specific unique ID associated with the specific field signal. At step 412, the first input-output channel 114A transmits the mixed signal to the input-output module 112.

The junction box device 108 is connected to the connector device 106A-D and the field signal marshal device 110. The junction box device 108 comprises a first processing unit 206. At step 414, the first processing unit 206 receives the first request from the field signal marshal device 110 and the mixed signal from the signal mixer 202.

At step 412, the first processing unit 206 extracts from the mixed signal, the at least one unique ID of the at least one field device 104A. The first processing unit 206 is further configured to compare the specific unique ID in the first request, with the at least one unique ID extracted from the mixed signal. At 414, the first processing unit 206 determines whether the specific unique ID matches with the at least one unique ID in the mixed signal. At 416, the first processing unit 206 routes the mixed signal associated with the at least one unique ID, to the first input-output channel 114A based on a determination that the specific unique ID matches with the at least one unique ID. Advantageously, the system 102 intelligently routes the at least one field signal to the first input-output channel 114A, based on the first request received from the input-output module. Thus, the at least one field signal is routed to the plurality of controllers automatically, without user intervention. Furthermore, time and effort required to perform cable engineering and hardwiring the plurality of field devices 104A-D to the plurality of controllers is reduced.

At 416, the first processing unit 206 captures a signal from an active communication channel between a field device (such as the first field device 104A) of the plurality of field devices 104A-D and a second input-output channel 114B of the plurality of input-output channels 114A-D. In one example, the captured signal is the mixed signal generated by the signal mixer 202 of the connector device 106A-D.

At 418, the first processing unit 206 extracts a unique ID from the signal captured from the active communication channel. In one example, the first processing unit 206 is configured to extract the unique ID by application of at least one signal processing filter on the captured signal. Examples of the at least one signal processing filter include a high-pass filter and a low-pass filter. In another example, the first processing unit 206 is configured to extract the unique ID by application of a decryption algorithm on the captured signal.

At 420, the first processing unit 206 compares the extracted unique ID with each of the plurality of unique ID present in the look-up table. In a case where the extracted unique ID is present in the look-up table, the first processing unit 206 is configured to determine whether the extracted unique ID is mapped to the second input-output channel 114B of the plurality of input-output channels 114A-C. In a case where it is determined that, in the look-up table, the extracted unique ID is not mapped to the second input-output channel 114B, the first processing unit 202 is further configured to terminate the active communication channel. Advantageously, any active communication channel from incorrectly connected field devices of the plurality of field devices 104A-D are automatically terminated. Thus, the plurality of field devices 104A-D are protected from incorrect termination. Furthermore, the system 102 enables the commission engineer to reroute the at least one field signal to different controllers by simply modifying the look-up table.

At 422, the first processing unit 206 analyzes the look-up table to determine whether the third input-output channel 114C of the plurality of input-output channels 114A-C is mapped to the extracted unique ID. At 424, the first processing unit 206 reroutes the captured signal to the determined third input-output channel 114C of the plurality of input-output channels 114A-C. Advantageously, any faults in connections between the plurality of field devices 104A-D and the plurality of input-output channels 114A-C are automatically rectified. Thus, the plurality of field devices 104A-D are protected from incorrect termination.

At step 426, the second processing unit 210 transmits a second request to the junction box device 108 via the first input-output channel 114A. The second request is to conduct a loop test of the first input-output channel 114A. The second processing unit 210 is further configured to determine whether the field signal marshal device 110 receives a response for the second request from the junction box device 108, within a specified time interval, via the first input-output channel 114A.

At step 428, the second processing unit 210 displays, based on a determination that the response is not received within the specific time interval, a notification that the first input-output channel 114A is faulty. The notification is displayed on the display device 212. The second processing unit 210 is further configured to transmit the second request for the loop test to the junction box device 108 via the second input-output channel 114B of the plurality of input-output channels 114A-C.

At step 430, the third processing unit 204 extracts, from the look-up table, the at least one unique ID associated with the at least one field device. The third processing unit 204 is further configured to generate the high frequency signal based on the extracted at least one unique ID.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description.

### List of reference numerals

1. an industrial environment 100
2. an engineering system 102
3. one or more client devices 120A-N
4. a network 104
5. one or more engineering objects 108A-N
6. one or more client devices 120A-N
7. a platform 110
8. an automation module 112
9. a server 114
10. a network interface 116
11. a database 118
12. a processor(s) 202
13. an accessible memory 204
14. a storage unit 206
15. a communication interface 208
16. an input-output unit 210
17. a network interface 212
18. a bus 214
19. an integrated development environment (IDE) 216
20. a request handler module 302,
21. an object behavior model generation module 304,
22. an analysis module 306,
23. a modifier module 308
24. an engineering object database 310
25. a validation module 312
26. a deployment module 314.

## Claims

1. A system (102) for intelligent signal routing in an industrial communication network (100), the system (102) comprising:
a connector device (106A-D) comprising
a signal mixer (202), wherein the signal mixer (202) is configured to:
receive at least one field signal from at least one field device (104A), wherein the at least one field device (104A) has at least one unique identification number (ID); and
superimpose the at least one unique ID on the received at least one field signal to generate a mixed signal;
a third processing unit (204), which is configured to:
extract, from a look-up table, the at least one unique ID associated with the at least one field device (104A); and
generate a high frequency signal based on the extracted at least one unique ID; and
wherein the at least one unique ID is superimposed on the at least one field signal by mixing the high frequency signal with the at least one field signal;
a field signal marshal device (110) comprising a first input-output channel (114A), wherein the first input-output channel (114A) is configured to:
transmit to a junction box device (108), a first request comprising a specific unique ID associated with a specific field signal; and
transmit the mixed signal to an input-output module (112); and
the junction box device (108) comprising a first processing unit (206), wherein the first processing unit (206) is configured to:
receive, the first request from the field signal marshal device (110) and the mixed signal from the signal mixer (202); and
determine whether the specific unique ID matches with the at least one unique ID in the mixed signal; and
route the mixed signal associated with the at least one unique ID, to the first input-output channel (114A) based on a determination that the specific unique ID matches with the at least one unique ID.

2. The system (102) according to claim 1, further comprising a memory (116) configured to store a look-up table,
wherein the look-up table comprises information associated with a plurality of mappings between:
a plurality of unique IDs associated with a plurality of field devices (104A-D) connected to the industrial communication network (100), and
a plurality of input-output channels (114A-C) of the field signal marshal device (110), and
wherein the first processing unit (206) is further configured to:
capture a signal from an active communication channel between a field device (104A) of the plurality of field devices (104A-D) and a second input-output channel (114B) of the plurality of input-output channels (114A-C);
extract a unique ID from the signal captured from the active communication channel;
analyze the plurality of mappings in the look-up table to determine whether the extracted unique ID is mapped to the second input-output channel (114B) of the plurality of input-output channels (114A-C); and
terminate the active communication channel based on a determination that the extracted unique ID is not mapped to the second input-output channel (114B) of the plurality of input-output channels (114A-C).

3. The system (102) according to claim 2, wherein the first processing unit (206) is further configured to:
analyze the plurality of mappings of the look-up table to determine a third input-output channel (114C) of the plurality of input-output channels (114C) which is mapped to the extracted unique ID; and
reroute the captured signal to the determined third input-output channel (114C) of the plurality of input-output channels (114A-C).

4. The system (102) according to claims 1 to 3, wherein the field signal marshal device (110) further comprises a second processing unit (210), wherein the second processing unit (210) is configured to:
transmit a second request to the junction box device (108) via the first input-output channel (114A), wherein the second request is for a loop test of the first input-output channel (114A);
determine whether the field signal marshal device (110) receives a response for the second request from the junction box device (108), within a specified time interval, via the first input-output channel (114A); and
display, based on a determination that the response is not received within the specific time interval, a notification that the first input-output channel (114A) is faulty; and
transmit the second request for the loop test to the junction box device (108) via a second input-output channel (114B) of the plurality of input-output channels (114A-C).

5. An apparatus (300) for intelligent signal routing in an industrial communication network (100), the apparatus (300) comprising:
a signal mixer (302) configured to:
receive at least one field signal from at least one field device (104A), wherein the at least one field device (104A) has at least one unique ID;
superimpose the at least one unique ID on the received at least one field signal to generate a mixed signal;
a first input-output channel (114A) configured to:
transmit to the signal mixer (302), a first request comprising a specific unique ID associated with a specific field signal; and
transmit the mixed signal to an input-output module (112); and
a first processing unit (304) configured to:
receive, the first request from the first input-output channel (114A) and the mixed signal from the signal mixer (302);
extract the at least one unique ID from the mixed signal;
determine whether the specific unique ID matches with the at least one unique ID associated with the at least one field device (104A); and
route the mixed signal associated with the at least one unique ID, to the first input-output channel (114A) based on a determination that the specific unique ID matches with the at least one unique ID associated with the at least one field device (104A).
a third processing unit which is configured to:
extract, from a look-up table, the at least one unique ID associated with the at least one field device (104A); and
generate the high frequency signal based on the extracted at least one unique ID, wherein the at least one unique ID is superimposed on the at least one field signal by mixing the high frequency signal with the at least one field signal.

6. The apparatus according to claim 5, further comprising a memory (116) comprising a look-up table,
wherein the look-up table comprises information associated with mappings between:
a plurality of unique IDs associated with a plurality of field devices (104A-D) in the industrial communication network (100), and
a plurality of input-output channels (114A-C) of the field signal marshal device (110), and
wherein the first processing unit (304) is further configured to:
capture a signal from an active communication channel between a field device (104A) of the plurality of field devices (104A-D) and a second input-output channel (114B) of the plurality of input-output channels (114A-C);
extract a unique ID from the signal captured from the active communication channel;
analyze the look-up table to determine whether, in the look-up table, the extracted unique ID is mapped to the second input-output channel (114B) of the plurality of input-output channels (114A-C); and
terminate the active communication channel based on a determination that the extracted unique ID is not mapped to the second input-output channel (114B) of the plurality of input-output channels (114A-C).

7. The apparatus according to claim 5 or 6, wherein the first processing unit (304) is further configured to:
analyze the look-up table to determine a third input-output channel (114C) of the plurality of input-output channels (114A-C), into which the extracted unique ID is mapped; and
reroute the captured signal to the determined third input-output channel (114C) of the plurality of input-output channels (114A-C).

8. The apparatus according to claims 5 to 7, further comprising a second processing unit (308), wherein the second processing unit (308) is configured to:
transmit a second request to the first processing unit (304) via the first input-output channel (114A), wherein the second request is for conducting a loop test of the first input-output channel (114A);
determine whether the first input-output channel (114A) receives a response for the second request from the first processing unit (304), within a specified time interval, via the first input-output channel (114A); and
display, based on a determination that the response is not received within the specific time interval, a notification that the first input-output channel (114A) is faulty; and
transmit the second request for the loop test to the first processing unit (304) via a second input-output channel (114B).

9. A method (400) of intelligent signal routing in an industrial communication network (100), the method (400) comprising:
in a system (102) comprising a signal mixer (202), a first input-output channel (114A), and a first processing unit (206), a third processing unit (204):
receiving, by the signal mixer (202), at least one field signal from at least one field device, wherein the at least one field device has at least one unique ID;
superimposing, by the signal mixer (202), the at least one unique ID on the received at least one field signal to generate a mixed signal;
transmitting via the first input-output channel (114A) to a junction box device (108), a first request comprising a specific unique ID associated with a specific field signal;
extracting, by the first processing unit (206), the at least one unique ID from the mixed signal;
determining, by the first processing unit (206), whether the specific unique ID matches with the at least one unique ID associated with the at least one field device (104A); and
routing, by the first processing unit (206), the mixed signal associated with the at least one unique ID, to the first input-output channel (114A) based on a determination that the specific unique ID matches with the at least one unique ID associated with the at least one field device (104A).
extracting, by the third processing unit (204), from a look-up table, the at least one unique ID associated with the at least one field device (104A);
generating, by the third processing unit (204), the high frequency signal based on the extracted at least one unique ID, wherein the at least one unique ID is superimposed on the at least one field signal by mixing the high frequency signal with the at least one field signal.

10. The method according to claim 9, further comprising:
capturing, by the first processing unit (206), a signal from an active communication channel between a field device of a plurality of field devices (104A-D) and a second input-output channel (114B) of a plurality of input-output channels (114A-C);
extracting, by the first processing unit (206), a unique ID from the signal captured from the active communication channel;
analyzing, by the first processing unit (206), a look-up table to determine whether, in the look-up table, the extracted unique ID is mapped to the second input-output channel (114B) of the plurality of input-output channels (114A-C); and
terminating, by the first processing unit (206), the active communication channel based on a determination that the extracted unique ID is not mapped to the second input-output channel (114B) of the plurality of input-output channels (114A-C).

11. The method according to claim 9 or 10, further comprising:
analyzing, by the first processing unit (206), the look-up table to determine a third input-output channel (114C) of the plurality of input-output channels (114A-C), which is mapped to the extracted unique ID; and
rerouting, by the first processing unit 206, the captured signal to the determined third input-output channel(114C) of the plurality of input-output channels (114A-C).

12. The method according to claims 9 to 11, further comprising:
transmitting, by the first processing unit (206), a second request to the junction box device (108) via the first input-output channel (114A), wherein the second request is for a loop test of the first input-output channel (114A);
determining, by the first processing unit (206), whether the field signal marshal device (110) receives a response for the second request from the junction box device (108), within a specified time interval, via the first input-output channel (114A); and
displaying, by the first processing unit (206), based on a determination that the response is not received within the specific time interval, a notification that the first input-output channel (114A) is faulty; and
transmitting, by the first processing unit (206), the second request for the loop test to the junction box device (108) via a second input-output channel (114B).

## Patentansprüche

1. System (102) zum intelligenten Signalrouting in einem industriellen Kommunikationsnetzwerk (100), wobei das System (102) Folgendes umfasst:
eine Verbindervorrichtung (106A-D), die Folgendes umfasst:
einen Signalmischer (202), wobei der Signalmischer (202) zu Folgendem ausgelegt ist:
Empfangen mindestens eines Feldsignals von mindestens einer Feldvorrichtung (104A), wobei die mindestens eine Feldvorrichtung (104A) mindestens eine eindeutige Identifikationsnummer (ID) aufweist; und
Überlagern der mindestens einen eindeutigen ID dem empfangenen mindestens einen Feldsignal, um ein gemischtes Signal zu erzeugen;
eine dritte Verarbeitungseinheit (204), die zu Folgendem ausgelegt ist:
Extrahieren der mindestens einen eindeutigen ID, die mit der mindestens einen Feldvorrichtung (104A) assoziiert ist, aus einer Nachschlagetabelle; und
Erzeugen eines Hochfrequenzsignals basierend auf der extrahierten mindestens einen eindeutigen ID; und
wobei die mindestens eine eindeutige ID dem mindestens einen Feldsignal durch Mischen des Hochfrequenzsignals mit dem mindestens einen Feldsignal überlagert wird;
eine Feldsignal-Marshal-Vorrichtung (110), die einen ersten Eingangs-/Ausgangskanal (114A) umfasst, wobei der erste Eingangs-/Ausgangskanal (114A) zu Folgendem ausgelegt ist:
Übertragen einer ersten Anforderung, die eine spezifische eindeutige ID umfasst, die mit einem spezifischen Feldsignal assoziiert ist, an eine Anschlusskastenvorrichtung (108); und
Übertragen des gemischten Signals an ein Eingangs-/Ausgangsmodul (112); und
wobei die Anschlusskastenvorrichtung (108) eine erste Verarbeitungseinheit (206) umfasst, wobei die erste Verarbeitungseinheit (206) zu Folgendem ausgelegt ist:
Empfangen der ersten Anforderung von der Feldsignal-Marshal-Vorrichtung (110) und des gemischten Signals von dem Signalmischer (202); und
Bestimmen, ob die spezifische eindeutige ID mit der mindestens einen eindeutigen ID in dem gemischten Signal übereinstimmt; und
Leiten des gemischten Signals, das mit der mindestens einen eindeutigen ID assoziiert ist, zu dem ersten Eingangs-/Ausgangskanal (114A) basierend auf einer Bestimmung, dass die spezifische eindeutige ID mit der mindestens einen eindeutigen ID übereinstimmt.

2. System (102) nach Anspruch 1, ferner umfassend einen Speicher (116), der dazu ausgelegt ist, eine Nachschlagetabelle zu speichern,
wobei die Nachschlagetabelle Informationen umfasst, die mit einer Mehrzahl von Zuordnungen zwischen Folgenden assoziiert sind:
einer Mehrzahl von eindeutigen IDs, die mit einer Mehrzahl von Feldvorrichtungen (104A-D) assoziiert ist, die mit dem industriellen Kommunikationsnetzwerk (100) verbunden sind, und einer Mehrzahl von Eingangs-/Ausgangskanälen (114A-C) der Feldsignal-Marshal-Vorrichtung (110), und
wobei die erste Verarbeitungseinheit (206) ferner zu Folgendem ausgelegt ist:
Erfassen eines Signals aus einem aktiven Kommunikationskanal zwischen einer Feldvorrichtung (104A) der Mehrzahl von Feldvorrichtungen (104A-D) und einem zweiten Eingangs-/Ausgangskanal (114B) der Mehrzahl von Eingangs-/Ausgangskanälen (114A-C);
Extrahieren einer eindeutigen ID aus dem aus dem aktiven Kommunikationskanal erfassten Signal;
Analysieren der Mehrzahl von Zuordnungen in der Nachschlagetabelle, um zu bestimmen, ob die extrahierte eindeutige ID dem zweiten Eingangs-/Ausgangskanal (114B) der Mehrzahl von Eingangs-/Ausgangskanälen (114A-C) zugeordnet ist; und
Beenden des aktiven Kommunikationskanals basierend auf einer Bestimmung, dass die extrahierte eindeutige ID nicht dem zweiten Eingangs-/Ausgangskanal (114B) der Mehrzahl von Eingangs-/Ausgangskanälen (114A-C) zugeordnet ist.

3. System (102) nach Anspruch 2, wobei die erste Verarbeitungseinheit (206) ferner zu Folgendem ausgelegt ist:
Analysieren der Mehrzahl von Zuordnungen der Nachschlagetabelle, um einen dritten Eingangs-/Ausgangskanal (114C) der Mehrzahl von Eingangs-/Ausgangskanälen (114C) zu bestimmen, der der extrahierten eindeutigen ID zugeordnet ist; und
Umleiten des erfassten Signals zu dem bestimmten dritten Eingangs-/Ausgangskanal (114C) der Mehrzahl von Eingangs-/Ausgangskanälen (114A-C).

4. System (102) nach Anspruch 1 bis 3, wobei die Feldsignal-Marshal-Vorrichtung (110) ferner eine zweite Verarbeitungseinheit (210) umfasst, wobei die zweite Verarbeitungseinheit (210) zu Folgendem ausgelegt ist:
Übertragen einer zweiten Anforderung über den ersten Eingangs-/Ausgangskanal (114A) an die Verbindungskastenvorrichtung (108), wobei die zweite Anforderung für einen Schleifentest des ersten Eingangs-/Ausgangskanals (114A) ist;
Bestimmen, ob die Feldsignal-Marshal-Vorrichtung (110) innerhalb eines spezifizierten Zeitintervalls eine Antwort für die zweite Anforderung von der Anschlusskastenvorrichtung (108) über den ersten Eingangs-/Ausgangskanal (114A) empfängt; und
Anzeigen einer Benachrichtigung, dass der erste Eingangs-/Ausgangskanal (114A) fehlerhaft ist, basierend auf einer Bestimmung, dass die Antwort nicht innerhalb des spezifischen Zeitintervalls empfangen wird; und
Übertragen der zweiten Anforderung für den Schleifentest über einen zweiten Eingangs-/Ausgangskanal (114B) der Mehrzahl von Eingangs-/Ausgangskanälen (114A-C) an die Anschlusskastenvorrichtung (108).

5. Einrichtung (300) zum intelligenten Signalrouting in einem industriellen Kommunikationsnetzwerk (100), wobei die Einrichtung (300) Folgendes umfasst:
einen Signalmischer (302), der zu Folgendem ausgelegt ist:
Empfangen mindestens eines Feldsignals von mindestens einer Feldvorrichtung (104A), wobei die mindestens eine Feldvorrichtung (104A) mindestens eine eindeutige ID aufweist;
Überlagern der mindestens einen eindeutigen ID dem empfangenen mindestens einen Feldsignal, um ein gemischtes Signal zu erzeugen;
einen ersten Eingangs-/Ausgangskanal (114A), der zu Folgendem ausgelegt ist:
Übertragen einer ersten Anforderung, die eine spezifische eindeutige ID umfasst, die mit einem spezifischen Feldsignal assoziiert ist, an den Signalmischer (302); und
Übertragen des gemischten Signals an ein Eingangs-/Ausgangsmodul (112); und
eine erste Verarbeitungseinheit (304), die zu Folgendem ausgelegt ist:
Empfangen der ersten Anforderung von dem ersten Eingangs-/Ausgangskanal (114A) und des gemischten Signals von dem Signalmischer (302);
Extrahieren der mindestens einen eindeutigen ID aus dem gemischten Signal;
Bestimmen, ob die spezifische eindeutige ID mit der mindestens einen eindeutigen ID übereinstimmt, die mit der mindestens einen Feldvorrichtung (104A) assoziiert ist; und
Leiten des gemischten Signals, das mit der mindestens einen eindeutigen ID assoziiert ist, zu dem ersten Eingangs-/Ausgangskanal (114A) basierend auf einer Bestimmung, dass die spezifische eindeutige ID mit der mindestens einen eindeutigen ID übereinstimmt, die mit der mindestens einen Feldvorrichtung (104A) assoziiert ist;
eine dritte Verarbeitungseinheit, die zu Folgendem ausgelegt ist:
Extrahieren der mindestens einen eindeutigen ID, die mit der mindestens einen Feldvorrichtung (104A) assoziiert ist, aus einer Nachschlagetabelle; und
Erzeugen des Hochfrequenzsignals basierend auf der extrahierten mindestens einen eindeutigen ID, wobei die mindestens eine eindeutige ID dem mindestens einen Feldsignal durch Mischen des Hochfrequenzsignals mit dem mindestens einen Feldsignal überlagert wird.

6. Einrichtung nach Anspruch 5, ferner umfassend einen Speicher (116), der eine Nachschlagetabelle umfasst,
wobei die Nachschlagetabelle Informationen umfasst, die mit Zuordnungen zwischen Folgenden assoziiert sind:
einer Mehrzahl von eindeutigen IDs, die mit einer Mehrzahl von Feldvorrichtungen (104A-D) in dem industriellen Kommunikationsnetzwerk (100) assoziiert ist, und
einer Mehrzahl von Eingangs-/Ausgangskanälen (114A-C) der Feldsignal-Marshal-Vorrichtung (110), und
wobei die erste Verarbeitungseinheit (304) ferner zu Folgendem ausgelegt ist:
Erfassen eines Signals aus einem aktiven Kommunikationskanal zwischen einer Feldvorrichtung (104A) der Mehrzahl von Feldvorrichtungen (104A-D) und einem zweiten Eingangs-/Ausgangskanal (114B) der Mehrzahl von Eingangs-/Ausgangskanälen (114A-C);
Extrahieren einer eindeutigen ID aus dem aus dem aktiven Kommunikationskanal erfassten Signal;
Analysieren der Nachschlagetabelle, um zu bestimmen, ob in der Nachschlagetabelle die extrahierte eindeutige ID dem zweiten Eingangs-/Ausgangskanal (114B) der Mehrzahl von Eingangs-/Ausgangskanälen (114A-C) zugeordnet ist; und
Beenden des aktiven Kommunikationskanals basierend auf einer Bestimmung, dass die extrahierte eindeutige ID nicht dem zweiten Eingangs-/Ausgangskanal (114B) der Mehrzahl von Eingangs-/Ausgangskanälen (114A-C) zugeordnet ist.

7. Einrichtung nach Anspruch 5 oder 6, **dadurch gekennzeichnet, dass** die erste Verarbeitungseinheit (304) ferner zu Folgendem ausgelegt ist:
Analysieren der Nachschlagetabelle, um einen dritten Eingangs-/Ausgangskanal (114C) der Mehrzahl von Eingangs-/Ausgangskanälen (114A-C) zu bestimmen, dem die extrahierte eindeutige ID zugeordnet ist; und
Umleiten des erfassten Signals zu dem bestimmten dritten Eingangs-/Ausgangskanal (114C) der Mehrzahl von Eingangs-/Ausgangskanälen (114A-C).

8. Einrichtung nach Anspruch 5 bis 7, ferner umfassend eine zweite Verarbeitungseinheit (308), wobei die zweite Verarbeitungseinheit (308) zu Folgendem ausgelegt ist:
Übertragen einer zweiten Anforderung über den ersten Eingangs-/Ausgangskanal (114A) an die erste Verarbeitungseinheit (304), wobei die zweite Anforderung zum Durchführen eines Schleifentests des ersten Eingangs-/Ausgangskanals (114A) ist;
Bestimmen, ob der erste Eingangs-/Ausgangskanal (114A) innerhalb eines spezifizierten Zeitintervalls eine Antwort für die zweite Anforderung von der ersten Verarbeitungseinheit (304) über den ersten Eingangs-/Ausgangskanal (114A) empfängt; und
Anzeigen einer Benachrichtigung, dass der erste Eingangs-/Ausgangskanal (114A) fehlerhaft ist, basierend auf einer Bestimmung, dass die Antwort nicht innerhalb des spezifischen Zeitintervalls empfangen wird; und
Übertragen der zweiten Anforderung für den Schleifentest über einen zweiten Eingangs-/Ausgangskanal (114B) an die erste Verarbeitungseinheit (304).

9. Verfahren (400) zum intelligenten Signalrouting in einem industriellen Kommunikationsnetzwerk (100), wobei das Verfahren (400) Folgendes umfasst:
in einem System (102), umfassend einen Signalmischer (202), einen ersten Eingangs-/Ausgangskanal (114A) und eine erste Verarbeitungseinheit (206), eine dritte Verarbeitungseinheit (204):
Empfangen mindestens eines Feldsignals von mindestens einer Feldvorrichtung durch den Signalmischer (202), wobei die mindestens eine Feldvorrichtung mindestens eine eindeutige ID aufweist;
Überlagern der mindestens einen eindeutigen ID dem empfangenen mindestens eine Feldsignal durch den Signalmischer (202), um ein gemischtes Signal zu erzeugen;
Übertragen einer ersten Anforderung, die eine spezifische eindeutige ID umfasst, die mit einem spezifischen Feldsignal assoziiert ist, über den ersten Eingangs-/Ausgangskanal (114A) an eine Anschlusskastenvorrichtung (108);
Extrahieren der mindestens einen eindeutigen ID durch die erste Verarbeitungseinheit (206) aus dem gemischten Signal;
Bestimmen durch die erste Verarbeitungseinheit (206), ob die spezifische eindeutige ID mit der mindestens einen eindeutigen ID übereinstimmt, die mit der mindestens einen Feldvorrichtung (104A) assoziiert ist; und
Leiten des gemischten Signals, das mit der mindestens einen eindeutigen ID assoziiert ist, durch die erste Verarbeitungseinheit (206) zu dem ersten Eingangs-/Ausgangskanal (114A) basierend auf einer Bestimmung, dass die spezifische eindeutige ID mit der mindestens einen eindeutigen ID übereinstimmt, die mit der mindestens einen Feldvorrichtung (104A) assoziiert ist;
Extrahieren der mindestens einen eindeutigen ID, die mit der mindestens einen Feldvorrichtung (104A) assoziiert ist, durch die dritte Verarbeitungseinheit (204) aus einer Nachschlagetabelle;
Erzeugen des Hochfrequenzsignals durch die dritte Verarbeitungseinheit (204) basierend auf der extrahierten mindestens einen eindeutigen ID, wobei die mindestens eine eindeutige ID dem mindestens einen Feldsignal durch Mischen des Hochfrequenzsignals mit dem mindestens einen Feldsignal überlagert wird.

10. Verfahren nach Anspruch 9, ferner umfassend:
Erfassen eines Signals aus einem aktiven Kommunikationskanal zwischen einer Feldvorrichtung einer Mehrzahl von Feldvorrichtungen (104A-D) und einem zweiten Eingangs-/Ausgangskanal (114B) einer Mehrzahl von Eingangs-/Ausgangskanälen (114A-C) durch die erste Verarbeitungseinheit (206) ;
Extrahieren einer eindeutigen ID durch die erste Verarbeitungseinheit (206) aus dem aus dem aktiven Kommunikationskanal erfassten Signal;
Analysieren einer Nachschlagetabelle durch die erste Verarbeitungseinheit (206), um zu bestimmen, ob in der Nachschlagetabelle die extrahierte eindeutige ID dem zweiten Eingangs-/Ausgangskanal (114B) der Mehrzahl von Eingangs-/Ausgangskanälen (114A-C) zugeordnet ist; und
Beenden des aktiven Kommunikationskanals durch die erste Verarbeitungseinheit (206) basierend auf einer Bestimmung, dass die extrahierte eindeutige ID nicht dem zweiten Eingangs-/Ausgangskanal (114B) der Mehrzahl von Eingangs-/Ausgangskanälen (114A-C) zugeordnet ist.

11. Verfahren nach Anspruch 9 oder 10, ferner umfassend:
Analysieren der Nachschlagetabelle durch die erste Verarbeitungseinheit (206), um einen dritten Eingangs-/Ausgangskanal (114C) der Mehrzahl von Eingangs-/Ausgangskanälen (114A-C) zu bestimmen, der der extrahierten eindeutigen ID zugeordnet ist; und
Umleiten des erfassten Signals durch die erste Verarbeitungseinheit 206 zu dem bestimmten dritten Eingangs-/Ausgangskanal (114C) der Mehrzahl von Eingangs-/Ausgangskanälen (114A-C).

12. Verfahren nach Anspruch 9 bis 11, ferner umfassend:
Übertragen einer zweiten Anforderung durch die erste Verarbeitungseinheit (206) über den ersten Eingangs-/Ausgangskanal (114A) an die Verbindungskastenvorrichtung (108), wobei die zweite Anforderung für einen Schleifentest des ersten Eingangs-/Ausgangskanals (114A) ist;
Bestimmen durch die erste Verarbeitungseinheit (206), ob die Feldsignal-Marshal-Vorrichtung (110) innerhalb eines spezifizierten Zeitintervalls eine Antwort für die zweite Anforderung von der Anschlusskastenvorrichtung (108) über den ersten Eingangs-/Ausgangskanal (114A) empfängt; und
Anzeigen einer Benachrichtigung, dass der erste Eingangs-/Ausgangskanal (114A) fehlerhaft ist, durch die erste Verarbeitungseinheit (206) basierend auf einer Bestimmung, dass die Antwort nicht innerhalb des spezifischen Zeitintervalls empfangen wird; und
Übertragen der zweiten Anforderung für den Schleifentest durch die erste Verarbeitungseinheit (206) über einen zweiten Eingangs-/Ausgangskanal (114B) an die Verbindungskastenvorrichtung (108).

## Revendications

1. Système (102) de routage intelligent de signaux dans un réseau de communication industriel (100), le système (102) comprenant :
un dispositif de connexion (106A-d) comprenant
un mélangeur de signaux (202), le mélangeur de signaux (202) étant configuré pour :
recevoir au moins un signal de terrain provenant d'au moins un dispositif de terrain (104A), ledit au moins un dispositif de terrain (104A) possédant au moins un numéro d'identification unique (ID) ; et
superposer l'au moins un ID unique sur l'au moins un signal de terrain reçu pour générer un signal mélangé ;
une troisième unité de traitement (204) configurée pour :
extraire, à partir d'une table de consultation, l'au moins un ID unique associé à l'au moins un dispositif de terrain (104A) ; et
générer un signal haute fréquence sur la base de l'au moins un ID unique extrait ; et
où l'au moins un ID unique est superposé à l'au moins un signal de terrain par mélange du signal haute fréquence avec l'au moins un signal de terrain ;
un dispositif de gestion de signaux de terrain (110) comprenant un premier canal d'entrée-sortie (114A), le premier canal d'entrée-sortie (114A) étant configuré pour :
transmettre à un dispositif de boîte de raccordement (108), une première demande comprenant un ID unique spécifique associé à un signal de terrain spécifique ; et
transmettre le signal mélangé à un module d'entrée-sortie (112) ; et
le dispositif de boîte de raccordement (108) comprenant une première unité de traitement (206) où la première unité de traitement (206) est configurée pour :
recevoir la première demande du dispositif de gestion de signaux de terrain (110) et le signal mélangé du mélangeur de signaux (202) ; et
déterminer si l'ID unique spécifique correspond à l'au moins un ID unique dans le signal mélangé ; et
router le signal mélangé associé à l'au moins un ID unique, vers le premier canal d'entrée-sortie (114A) en fonction de la détermination de la correspondance de l'ID unique spécifique avec l'au moins un ID unique.

2. Système (102) selon la revendication 1, comprenant en outre une mémoire (116) configurée pour stocker une table de consultation,
dans lequel la table de consultation comprend des informations associées à une pluralité de mises en correspondance entre :
une pluralité d'ID uniques associés à une pluralité de dispositifs de terrain (104A-d) connectés au réseau de communication industriel (100), et
une pluralité de canaux d'entrée-sortie (114A-C) du dispositif de gestion de signaux de terrain (110), et
où la première unité de traitement (206) est en outre configurée pour :
capturer un signal provenant d'un canal de communication actif entre un dispositif de terrain (104A) de la pluralité de dispositifs de terrain (104A-d) et un deuxième canal d'entrée-sortie (114B) de la pluralité de canaux d'entrée-sortie (114A-C) ;
extraire un ID unique à partir du signal capturé à partir du canal de communication actif ;
analyser la pluralité de mises en correspondance dans la table de consultation pour déterminer si l'ID unique extrait est mis en correspondance avec le deuxième canal d'entrée-sortie (114B) de la pluralité de canaux d'entrée-sortie (114A-C) ; et
terminer le canal de communication actif en fonction de la détermination que l'ID unique extrait n'est pas mis en correspondance avec le deuxième canal d'entrée-sortie (114B) de la pluralité de canaux d'entrée-sortie (114A-C).

3. Système (102) selon la revendication 2, dans lequel la première unité de traitement (206) est en outre configurée pour :
analyser la pluralité de mises en correspondance de la table de consultation pour déterminer un troisième canal d'entrée-sortie (114C) de la pluralité de canaux d'entrée-sortie (114C) qui est mis en correspondance avec l'ID unique extrait ; et
rerouter le signal capturé vers le troisième canal d'entrée-sortie déterminé (114C) de la pluralité de canaux d'entrée-sortie (114A-C).

4. Système (102) selon les revendications 1 à 3, dans lequel le dispositif de gestion de signaux de terrain (110) comprend en outre une deuxième unité de traitement (210), la deuxième unité de traitement (210) étant configurée pour :
transmettre une deuxième demande au dispositif de boîte de raccordement (108) par l'intermédiaire du premier canal d'entrée-sortie (114A), la deuxième demande portant sur un test de boucle du premier canal d'entrée-sortie (114A) ;
déterminer si le dispositif de gestion de signaux de terrain (110) reçoit une réponse pour la deuxième demande du dispositif de boîte de raccordement (108), dans un intervalle de temps spécifié, par l'intermédiaire du premier canal d'entrée-sortie (114A) ; et
afficher, sur la base d'une détermination que la réponse n'est pas reçue dans l'intervalle de temps spécifique, une notification indiquant que le premier canal d'entrée-sortie (114A) est défectueux ; et
transmettre la deuxième demande de test de boucle au dispositif de boîte de raccordement (108) par l'intermédiaire d'un deuxième canal d'entrée-sortie (114B) de la pluralité de canaux d'entrée-sortie (114A-C).

5. Appareil (300) de routage intelligent de signaux dans un réseau de communication industriel (100), l'appareil (300) comprenant :
un mélangeur de signaux (302) configuré pour :
recevoir au moins un signal de terrain provenant d'au moins un dispositif de terrain (104A), ledit au moins un dispositif de terrain (104A) ayant au moins un ID unique ;
superposer l'au moins un ID unique sur l'au moins un signal de terrain reçu pour générer un signal mélangé ;
un premier canal d'entrée-sortie (114A) configuré pour :
transmettre au mélangeur de signaux (302) une première demande comprenant un ID unique spécifique associé à un signal de terrain spécifique ; et
transmettre le signal mélangé à un module d'entrée-sortie (112) ; et
une première unité de traitement (304) configurée pour :
recevoir la première demande du premier canal d'entrée-sortie (114A) et le signal mélangé du mélangeur de signaux (302) ;
extraire du signal mélangé l'au moins un ID unique ;
déterminer si l'ID unique spécifique correspond à l'au moins un ID unique associé à l'au moins un dispositif de terrain (104A) ; et
router le signal mélangé associé à l'au moins un ID unique vers le premier canal d'entrée-sortie (114A) en fonction de la détermination que l'ID unique spécifique correspond à l'au moins un ID unique associé à l'au moins un dispositif de terrain (104A) ;
une troisième unité de traitement configurée pour :
extraire, à partir d'une table de consultation, l'au moins un ID unique associé à l'au moins un dispositif de terrain (104A) ; et
générer le signal haute fréquence sur la base de l'au moins un ID unique extrait, l'au moins un ID unique étant superposé à l'au moins un signal de terrain par mélange du signal haute fréquence avec l'au moins un signal de terrain.

6. Appareil selon la revendication 5, comprenant en outre une mémoire (116) comprenant une table de consultation,
dans lequel la table de consultation comprend des informations associées à des mises en correspondance entre :
une pluralité d'ID uniques associés à une pluralité de dispositifs de terrain (104A-d) dans le réseau de communication industriel (100), et
une pluralité de canaux d'entrée-sortie (114A-C) du dispositif de gestion de signaux de terrain (110), et
où la première unité de traitement (304) est en outre configurée pour :
capturer un signal provenant d'un canal de communication actif entre un dispositif de terrain (104A) de la pluralité de dispositifs de terrain (104A-d) et un deuxième canal d'entrée-sortie (114B) de la pluralité de canaux d'entrée-sortie (114A-C) ;
extraire un ID unique à partir du signal capturé à partir du canal de communication actif ;
analyser la table de consultation pour déterminer si, dans la table de consultation, l'ID unique extrait est mis en correspondance avec le deuxième canal d'entrée-sortie (114B) de la pluralité de canaux d'entrée-sortie (114A-C) ; et
terminer le canal de communication actif en fonction de la détermination que l'ID unique extrait n'est pas mis en correspondance avec le deuxième canal d'entrée-sortie (114B) de la pluralité de canaux d'entrée-sortie (114A-C).

7. Appareil selon la revendication 5 ou la revendication 6, dans lequel la première unité de traitement (304) est en outre configurée pour :
analyser la table de consultation pour déterminer un troisième canal d'entrée-sortie (114C) de la pluralité de canaux d'entrée-sortie (114A-C), où l'ID unique extrait est mis en correspondance ; et
rerouter le signal capturé vers le troisième canal d'entrée-sortie déterminé (114C) de la pluralité de canaux d'entrée-sortie (114A-C) .

8. Appareil selon les revendications 5 à 7, comprenant en outre une deuxième unité de traitement (308), la deuxième unité de traitement (308) étant configurée pour :
transmettre une deuxième demande à la première unité de traitement (304) par l'intermédiaire du premier canal d'entrée-sortie (114A), la deuxième demande étant destinée à conduire un test de boucle du premier canal d'entrée-sortie (114A) ;
déterminer si le premier canal d'entrée-sortie (114A) reçoit une réponse pour la deuxième demande depuis la première unité de traitement (304), dans un intervalle de temps spécifié, par l'intermédiaire du premier canal d'entrée-sortie (114A) ; et
afficher, sur la base d'une détermination que la réponse n'est pas reçue dans l'intervalle de temps spécifique, une notification indiquant que le premier canal d'entrée-sortie (114A) est défectueux ; et
transmettre la deuxième demande de test de boucle à la première unité de traitement (304) par l'intermédiaire d'un deuxième canal d'entrée-sortie (114B).

9. Procédé (400) de routage intelligent de signaux dans un réseau de communication industriel (100), le procédé (400) comprenant les étapes suivantes :
dans un système (102) comprenant un mélangeur de signaux (202), un premier canal d'entrée-sortie (114A) et une première unité de traitement (206), une troisième unité de traitement (204) :
recevoir, par le mélangeur de signaux (202), au moins un signal de terrain provenant d'au moins un dispositif de terrain, ledit au moins un dispositif de terrain ayant au moins un ID unique ;
superposer, par le mélangeur de signaux (202), l'au moins un ID unique sur l'au moins un signal de terrain reçu pour générer un signal mélangé ;
transmettre, par l'intermédiaire du premier canal d'entrée-sortie (114A), à un dispositif de boîte de raccordement (108), une première demande comprenant un ID unique spécifique associé à un signal de terrain spécifique ;
extraire, par la première unité de traitement (206), l'au moins un ID unique du signal mélangé ;
déterminer, par la première unité de traitement (206), si l'ID unique spécifique correspond à l'au moins un ID unique associé à l'au moins un dispositif de terrain (104A) ; et
router, par la première unité de traitement (206), le signal mélangé associé à l'au moins un ID unique vers le premier canal d'entrée-sortie (114A) en fonction de la détermination que l'ID unique spécifique correspond à l'au moins un ID unique associé à l'au moins un dispositif de terrain (104A) ;
extraire, par la troisième unité de traitement (204), à partir d'une table de consultation, l'au moins un ID unique associé à l'au moins un dispositif de terrain (104A) ;
générer, par la troisième unité de traitement (204), le signal haute fréquence sur la base de l'au moins un ID unique extrait, l'au moins un ID unique étant superposé à l'au moins un signal de terrain par mélange du signal haute fréquence avec l'au moins un signal de terrain.

10. Procédé selon la revendication 9, comprenant en outre les étapes suivantes :
capturer, par la première unité de traitement (206), un signal provenant d'un canal de communication actif entre un dispositif de terrain d'une pluralité de dispositifs de terrain (104A-d) et un deuxième canal d'entrée-sortie (114B) d'une pluralité de canaux d'entrée-sortie (114A-C) ;
extraire, par la première unité de traitement (206), un ID unique à partir du signal capté sur le canal de communication actif ;
analyser, par la première unité de traitement (206), une table de consultation pour déterminer si, dans la table de consultation, l'ID unique extrait est mis en correspondance avec le deuxième canal d'entrée-sortie (114B) de la pluralité de canaux d'entrée-sortie (114A-C) ; et
terminer, par la première unité de traitement (206), le canal de communication actif en fonction de la détermination que l'ID unique extrait n'est pas mis en correspondance avec le deuxième canal d'entrée-sortie (114B) de la pluralité de canaux d'entrée-sortie (114A-C).

11. Procédé selon la revendication 9 ou la revendication 10, comprenant en outre les étapes suivantes :
analyser, par la première unité de traitement (206), la table de consultation pour déterminer un troisième canal d'entrée-sortie (114C) de la pluralité de canaux d'entrée-sortie (114A-C), qui est mis en correspondance avec l'ID unique extrait ; et
rerouter, par la première unité de traitement (206), le signal capturé vers le troisième canal d'entrée-sortie (114C) déterminé de la pluralité de canaux d'entrée-sortie (114A-C).

12. Procédé selon les revendications 9 à 11, comprenant en outre les étapes suivantes :
transmettre, par la première unité de traitement (206), une deuxième demande au dispositif de boîte de raccordement (108) par l'intermédiaire du premier canal d'entrée-sortie (114A), la deuxième demande portant sur un test de boucle du premier canal d'entrée-sortie (114A) ;
déterminer, par la première unité de traitement (206), si le dispositif de gestion de signaux de terrain (110) reçoit une réponse pour la deuxième demande du dispositif de boîte de raccordement (108), dans un intervalle de temps spécifié, par l'intermédiaire du premier canal d'entrée-sortie (114A) ; et
afficher, par la première unité de traitement (206), sur la base d'une détermination que la réponse n'est pas reçue dans l'intervalle de temps spécifique, une notification indiquant que le premier canal d'entrée-sortie (114A) est défectueux ; et
transmettre, par la première unité de traitement (206), la deuxième demande de test de boucle au dispositif de boîte de raccordement (108) par l'intermédiaire d'un deuxième canal d'entrée-sortie (114B).
